(19) Europäisches Patentamt
European Patent Office
Office européen des brevets

(11) **EP 2 622 379 B1**

(12) **EUROPEAN PATENT SPECIFICATION**

(45) Date of publication and mention
of the grant of the patent:
**16.01.2019 Bulletin 2019/03**

(51) Int Cl.:
**G01V 1/46** *(2006.01)*

(21) Application number: **11770259.7**

(22) Date of filing: **28.09.2011**

(86) International application number:
**PCT/US2011/053645**

(87) International publication number:
**WO 2012/050880 (19.04.2012 Gazette 2012/16)**

(54) **DEVICE AND METHOD FOR IMAGING OF NON-LINEAR AND LINEAR PROPERTIES OF FORMATIONS SURROUNDING A BOREHOLE**

VORRICHTUNG UND VERFAHREN ZUR BILDGEBUNG VON NICHTLINEAREN UND LINEAREN EIGENSCHAFTEN VON FORMATIONEN UM EIN BOHRLOCH

DISPOSITIF ET PROCÉDÉ DE MISE EN IMAGES DES PROPRIÉTÉS NON LINÉAIRES ET LINÉAIRES DE FORMATIONS ENTOURANT UN SONDAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2010 US 893573**
**29.09.2010 US 893530**

(43) Date of publication of application:
**07.08.2013 Bulletin 2013/32**

(73) Proprietor: **Chevron U.S.A. Inc.**
**San Ramon, CA 94583 (US)**

(72) Inventors:
• **JOHNSON, Paul Allan**
**Santa Fe**
**New Mexico 87506 (US)**
• **TENCATE, James A.**
**Los Alamos**
**New Mexico 87544 (US)**
• **LE BAS, Pierre-Yves**
**Los Alamos**
**New Mexico 87544 (US)**
• **GUYER, Robert A.**
**Reno**
**Nevada 89503 (US)**
• **VU, Cung Khac**
**Houston**
**Texas 77005 (US)**
• **SKELT, Christopher H.**
**Houston**
**Texas 77042 (US)**

(74) Representative: **Haseltine Lake LLP**
**Redcliff Quay**
**120 Redcliff Street**
**Bristol BS1 6HU (GB)**

(56) References cited:
**US-A- 5 331 604          US-A- 5 521 882**
**US-A1- 2008 130 409**

• **D.A. KAS'YANOV ET AL: "NONLINEAR ACOUSTIC LOGGING", XI SESSION OF THE RUSSIAN ACOUSTICAL SOCIETY, 1 January 2001 (2001-01-01), pages 361-364, XP55039034,**

**Description**

This invention was made with Government support under Cooperative Research and Development Agreement *(CRADA)* Contract Number DE-AC52-06NA25396 awarded by the United States Department of Energy. The Government may have certain rights in this invention.

FIELD

The present disclosure relates generally to acoustic interrogation of rock formations around a borehole and more particularly to imaging of non-linear and linear properties of formation surrounding the borehole.

BACKGROUND

Detailed characterization of natural and induced fractures away from the borehole, reliable sequestration of $CO_2$, assessing mechanical integrity and predicting borehole breakout in oil and gas reservoirs, and probing cement integrity require new approaches to material characterization and imaging. Among the existing probes of material elasticity, the elastic nonlinear response (anelasticity) is an approach to probe material integrity. The elastic nonlinearity of a solid is a measure of the material mechanical damage state. Elastic nonlinear response tends to be the best measure of material damage. Thus, as a near-borehole probe, nonlinear methods hold the most promise for discerning mechanically damaged regions or potential crack/fracture conduits.
Reference may be made to US5521882, which relates to the measurement of formation characteristics using an acoustic borehole tool having sources of different frequencies. "Nonlinear acoustic logging", D. A. Kas'yanov and G. M. Shalashov, XI Session of the Russian Acoustical Society, 2001, discloses measurement of subsurface nonlinear properties using cross-well measurements with low frequency and high frequency sources.

SUMMARY

The present invention is defined by the appended claims. In accordance with some aspects of the present disclosure, a method for investigating material surrounding a borehole according to claim 1 is disclosed.

In the method, the second high frequency pulses are received at the one or more receivers if the first sequence of high frequency pulses encounters the one or more features within the material with a contrast in acoustic impedance that results in reflection or backscattering of energy to the borehole. In the method, the second high frequency pulses can be received at the one or more receivers if the first sequence of high frequency pulses encounters the one or more features that are oriented such that the one or more features directs energy back to the borehole while undergoing the distortion due to the first low frequency acoustic wave such that the distortion alters the contrast in the acoustic impedance during a cycle of the low frequency acoustic wave.

In the method, the first acoustic wave and the first sequence of high frequency pulses can be generated by a compressional wave source and/or a shear wave source. In the case that the first acoustic wave is from a shear wave source, one or more features in the material may experience crack shearing that will imprint a signature on the high frequency reflected pulses. In the case that the first acoustic wave is from a compressional wave source and the first sequence of high frequency pulses are shear waves the receivers will tend to receive reflected energy during the pump induced crack dilation in the one or more features. In some aspects, the source of the first acoustic wave can include a vibrating member that is configured to induce elastic nonlinearity in the material.

In the method, the one or more receivers can be arranged in an array in the borehole and can be configured to record one or more directional components of the one or more second high frequency pulses.

The method can include repeating the generating the first acoustic wave and the directing with the first sequence of high frequency pulses directed at different azimuth orientations and at different depths within the borehole to produce three-dimensional images of linear and nonlinear reflecting and backscattering features of the material surrounding the borehole. The material surrounding the borehole can include cement, casing, rock formations, fluids in or surrounding the borehole, disbonds in the cement/rock interface and/or the steel casing/cement interface. The received second high frequency pulses can have properties that depend on a phase of the low frequency wave at a location and a time at which the first sequence of high frequency pulses are reflected by the material.

The method can further include determining whether the material includes a linear reflector or a nonlinear reflector based on the received one or more second high frequency pulses. The method can also further include filtering the received one or more second high frequency pulses. The filter can include a high pass filter that can isolate high frequency components from the received one or more second high frequency pulses. Moreover, the method can include determining an amplitude change over time of the filtered one or more second high frequency pulses. The first sequence of high frequency pulses can be either chirped or coded or both chirped and coded. The first sequence of high frequency pulses can be modulated in amplitude, phase, and/or period.

In some aspects, the first sequence of high frequency pulses can have a frequency between about 10 to 1000 times that of the low frequency acoustic wave.

In some aspects, the method can include determining a radial distance to the one or more features using a first time, the time at which the first sequence of high frequency pulses were transmitted, and a second time, the time at which the second high frequency pulses were received, and an estimated velocity of sound of the material surrounding the borehole. The determination can include computing a cross-correlation of the first sequence of high frequency pulses and second high frequency pulses.

In some aspects, the second high frequency pulses can be received at the one or more receivers if the first sequence of high frequency pulses encounters a nonlinear elastic feature in the material that is oriented such that feature directs energy back while undergoing crack shearing.

In accordance with an aspect of the present disclose, an apparatus for investigating material surrounding a borehole according to claim 13 is disclosed.

In some aspects, the second high frequency pulses are received at the one or more receivers if the first sequence of high frequency pulses encounters the one or more features within the material with a contrast in acoustic impedance that results in reflection or backscattering of energy to the borehole. Moreover, the second high frequency pulses can be received at the one or more receivers if the first sequence of high frequency pulses encounters the one or more features that are oriented such that the one or more features directs energy back to the borehole while undergoing the distortion due to the first low frequency acoustic wave such that the distortion alters the contrast in the acoustic impedance during a cycle of the low frequency acoustic wave.

In some aspects, the first acoustic wave source, the source of the first sequence of high frequency pulses or both can be configured to produce a compressional wave, a shear wave or both. The first acoustic wave source can include a vibrating member that is configured to induce elastic nonlinearity in the material.

In some aspects, the one or more receivers can be arranged in an array in the borehole. Moreover, the one or more receivers can be configured to record one or more directional components of the one or more second high frequency pulses.

In some aspects, the apparatus can include a processor in communication with a memory having instructions which permit determination of a radial distance to the one or more features from the borehole. The apparatus can include a processor in communication with a memory having instructions which permit the construction of one or more three-dimensional images of the material based on repeated acoustic wave penetrations into the material at different azimuth orientations and at different depths within the borehole. The material surrounding the borehole can include cement, casing, rock formations, fluids in or surrounding the borehole, and/or disbonds in the cement/rock interface and/or the casing/cement interface. Further, the apparatus can include a processor in communication with a memory having machine executable instructions stored therein which, when executed cause the processor to determine the presence in the material of linear reflectors and/or a nonlinear reflectors based on the received one or more second high frequency pulses.

In some aspects, the apparatus can include a filter that is arranged to filter the received one or more second high frequency pulses. The filter can include a high pass filter that is arranged to isolate the high frequency components of the received one or more second high frequency pulses. In some aspects, the apparatus includes a processor that can be configured to determine the amplitude change over time of the filtered one or more second high frequency pulses.

In some aspects, the apparatus can include an encoder arranged to encode the first sequence of high frequency pulses with a time-varying signature by introducing chirps and/or frequency protocols. In some aspects, the apparatus includes a processor that can use the encoded first sequence of high frequency pulses to measure a time-of-flight between the first sequence of high frequency pulses and the received second high frequency pulses. The time-varying signature can include a change with time in an amplitude, a phase, and/or a period of the first sequence of high frequency pulses.

In some aspects, the first sequence of high frequency pulses have a frequency between about 10 to 1000 times that of the low frequency acoustic wave.

In some aspects, the radial distance is determined by computing a cross-correlation in a time domain with the first and the second sequences of high frequency pulses. The processor can be arranged to determine the radial distance to the material based upon a first time at which the first sequence of high frequency pulses were transmitted, a second time at which the second sequence of high frequency pulses where received and an estimated velocity of sound of the material.

In accordance with some aspects of the present disclosure, a method for investigating material surrounding a borehole according to claim 27 is disclosed.

In some aspects, the sequence of high frequency pulses can be configured to propagate into the material as refracted waves, scattered waves or direct waves. In the method, the low frequency vibration, the sequence of high frequency pulses or both can be produced by a compressional source, a shear wave source or both wherein the compressional source, the shear wave source or both can include a vibrating member that is configured to induce elastic nonlinearity into the material.

In some aspects, the one or more receivers can be arranged in an array in the borehole and the one or more receivers can be configured to record one or more directional components of the sequence of high frequency pulses.

The method can include repeating the generating the low frequency vibration and the sequences of high frequency pulses at different azimuth orientations and at different depths within the borehole to produce one or more images of the material or properties of the material including a linear velocity, a linear modulus, a nonlinear velocity and/or a nonlinear modulus.

In some aspects, an elastic distortion cycle can be caused by the low frequency vibration results in a corresponding cyclical variation in local velocity in the material.

In some aspects, the method can include processing a sequence of high frequencies pulses returned to the one or more receivers from the material to determine an elastic nonlinear response of the material.

In accordance with some aspects of the present disclosure, an apparatus for investigating material surrounding a borehole according to claim 32 is disclosed.

In some aspects, the sequence of high frequency pulses can be configured to propagate into the material as refracted waves, scattered waves or direct waves. In some aspects, the first acoustic wave source, the second acoustic wave source, or both can include a compressional source, a shear wave source or both, wherein the compressional source, the shear wave source or both can include a vibrating member that is configured to induce elastic nonlinearity into the material.

In some aspects, the one or more receivers can be arranged in an array in the borehole and can be configured to record one or more directional components of the sequence of high frequency pulses.

In some aspects, the apparatus can include a controller configured to repeat the generation of the low frequency vibration and the sequences of high frequency pulses at different azimuth orientations and at different depths within the borehole to produce one or more images of the material or properties of the material including a linear velocity, a linear modulus, a nonlinear velocity and/or a nonlinear modulus.

In some aspects, an elastic distortion cycle of the low frequency vibration generated by the first acoustic wave source can result in a corresponding cyclical variation in local velocity in the material.

In some aspects, the apparatus can include a processor in communication with a memory having machine executable instructions stored therein which, when executed cause the processor to determine an elastic nonlinear response of the material based on a sequence of high frequencies pulses returned to the one or more receivers from the material.

These and other objects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various Figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

BRIEF DESCRIPTION OF THE DRAWINGS

Figure 1 shows an example arrangement for investigating cracks and other damage in material that runs parallel or sub-parallel to the borehole in accordance with an aspect of the disclosure.

Figures 2a and 2b show an example interaction of the material surrounding the borehole to the low frequency acoustic wave, or "pump" wave and the sequence of high frequency pulses, or "probe" wave or pulses in accordance with aspects of the disclosure.

Figures 3a-3c show an example detection process used to distinguish between linear and nonlinear scatters in accordance with aspects of the disclosure.

Figure 4 shows an example arrangement for investigating cracks and other damage that are oriented perpendicular or substantially perpendicular to the borehole in accordance with aspects of the disclosure.

Figures 5a-5e show an example graphic illustration of the operation of the arrangement of Figure 4.

Figures 6a-6c show an example of received signals from the arrangement of Figure 4.

DETAILED DESCRIPTION

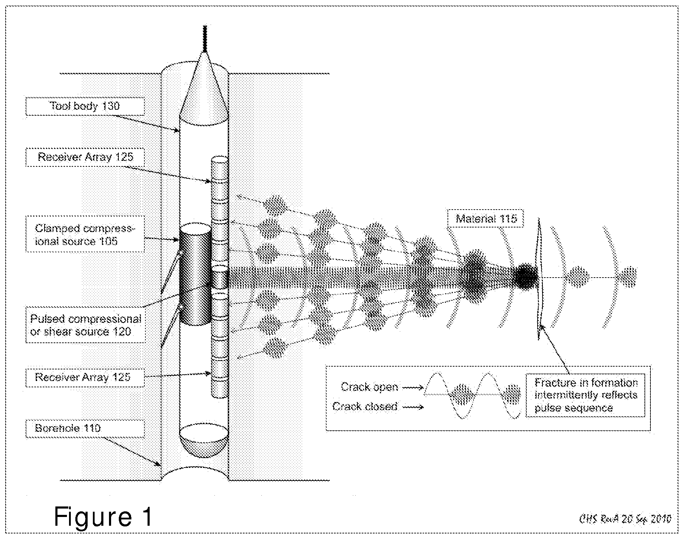

Figure 1 shows an example arrangement for investigating cracks and other damage in material surrounding the borehole that runs parallel or sub-parallel to the borehole. The borehole can be drilled in a variety of inclinations, such as vertical, inclined or horizontal, and embedded in a rock formation. As used herein, the term "sub-parallel" will mean almost parallel, but diverging or converging slightly. The material surrounding the borehole can include cement, casing, rock formations and/or various types of fluids such as drilling mud, completion fluid, formation water or hydrocarbon. One or more low frequency transducers 105 are arranged within borehole 110 to produces a low frequency acoustic wave or "pump" wave into material 115 surrounding borehole 110. The low frequency acoustic wave is sufficiently powerful to induce non-linear behavior in material 115 that has this characteristic. For example, the low frequency or "pump" wave can be between 1 Hz to 100 kHz. One or more high frequency transducers 120 are arranged within borehole 110 to contemporaneously produce a sequence of a high frequency pulses, or "probe" wave into material 115. This non-linear behavior refers to a non-linear dependence of elastic properties on the instantaneous strain state of the materials undergoing the strain. As a result of this non-linear response, the behavior of the high frequency pulses can be modified, for example, by a change in a pulse amplitude and/or a pulse velocity. Transducer 120 can be arranged to generate pulses at a high repetition rate. For example, transducer 120 can be configured to have a repetition rate of between 5 to 100 times for each pump wave cycle and emits bursts of high frequency 10-100 times that of the pump. In some aspects, transducers 105, 120 or both can include a vibration source and can be either clamped or unclamped in the borehole 110.

In some aspects, both transducers 105 and 120 are arranged such that they generate the low frequency acoustic wave and the sequence of high frequency pulses, respectively, that propagate radially with respect to the longitudinal axis of borehole 110 into material 115. In some aspects, since the low frequency acoustic waves generated by transducer 105 tends to spread out more, only transducer 120 is oriented to generate the sequence of high frequency pulses radially into material 115.

In some aspects, one or more piezoelectric transducers can be used. If more than one transducer is used, they can be arranged in an array configuration. By way of non-limiting examples, the array configuration can be linear, circular, a filled circle or a square array. The transducers within the array can be divided into groups, such that a first group of transducers can be driven by a source at the low frequency and a second group of transducers can be driven by the source or by a different source at the higher frequency.

In some embodiments, one or more sources (not shown) can be used to produce signals to drive transducers 105 and/or 120. By way of a non-limiting example, the signals can be produced by a 2-channel signal generator. Similar signal or function generators may be used. Low frequency sources 105 and high frequencies sources 120 can be controlled by a controller (not shown) to emit their respective acoustic waves or pulses contemporaneously into material 115.

In some aspects, the low frequency wave and/or the high frequencies pulses can be broadband having a frequency range spread about the central frequency.

One or more receivers 125 can be positionable, such that they can be arranged within borehole 110 at either above, below or both low frequency sources 105, high frequency sources 120 or both. One or more of low frequency sources 105, high frequencies sources 120, and/ or receivers 125 can be arranged in an array configuration within borehole 110. One or more of low frequency sources 105, high frequencies sources 120, receivers 125 can be arranged on a common tool body 130 that can be raised or lowered within borehole 110. In some aspects, the one or more receivers 125 can be locked to a side of the borehole and may record three components of wave particle motion so that the nonlinear feature azimuth can be inferred.

In this arrangement, the low frequency (pump) wave and the high frequency pulses (probe) both travel perpendicular to borehole 110 out into the material 115 surrounding borehole 110. If the pump wave has sufficient amplitude (generally greater than $10^{-6}$ strain amplitude), it will cause non-linear behavior, as discussed above, to be exhibited by cracks in material 115 that are oriented approximately perpendicular to radii of borehole 110. Transducer 120 is arranged to emit a sequence of high frequency pulses or bursts to probe for nonlinearity induced by the pump wave. If a crack is present, the low frequency or pump wave will cause the crack to close and open depending on the pump wave phase. During the compressional phase, the crack closes and the high frequency wave pass through the crack and does not return to borehole 110, since the closed crack does not exhibit any noticeable acoustical impedance contrast. During the dilatational phase, the crack is propped open briefly and the probe pulses are reflected back to borehole 110 to be detected by receiver 125 in borehole 110. The crack, while open, creates an acoustical impedance contrast. Cracks can be distinguished from other reflecting interfaces such as structural boundaries or voids, because only cracks create the nonlinear effect that depends on pump wave phase. An interface or void will reflect the probe pulses independent of the pump wave phase. In this manner cracks can be distinguished from interfaces, voids, intact bonds between cement and casing or formation, etc. Other nonlinear features such as disbonding between cement and a casing in the borehole, as well as the cement and surrounding formations can also be probed.

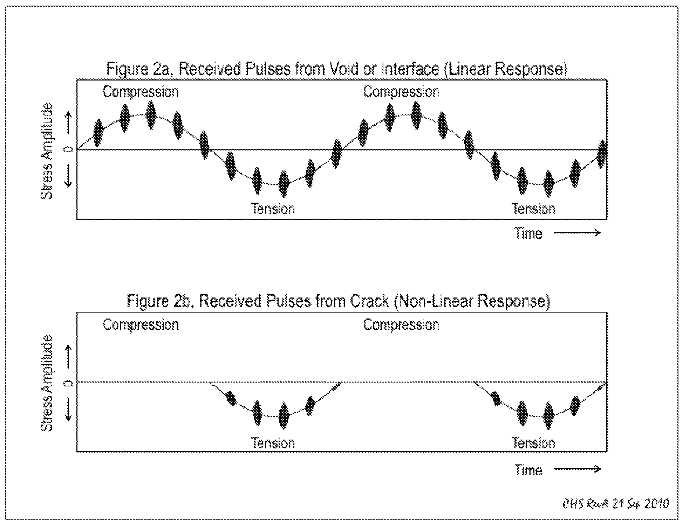

Figures 2a and 2b show an example interaction of the material surrounding the borehole to the low frequency acoustic wave, or "pump" wave produced by a compressional source and the sequence of high frequency pulses, or "probe" wave or pulses. In figures 2a and 2b, stress amplitude of the rock formation (arbitrary units) is shown versus time (arbitrary units). The low frequency vibration oscillates a crack or a sequence of cracks in the formation causing the crack(s) to open during the wave dilation (tension) phase and to close during the wave compression phase. The high frequency pulses are emitted such that they are many pulses during each low frequency vibration cycle. If the low frequency vibration encounters a linear elastic feature such as a void or a layer interface, both the high frequency pulses and the low frequency waves are reflected back from the feature to the borehole, as shown by the in figure 2a. If a crack, series of cracks or a highly mechanically damaged region is encountered, the feature is activated by its intrinsic nonlinearity. When the crack is under compression from the effect of the vibration, the high and low frequency signals pass through it, not sensing the crack. When the crack is under tension from the dilatational portion of the vibration, the high and low frequency signals are reflected from the crack, back to the borehole, as shown by figure 2b.

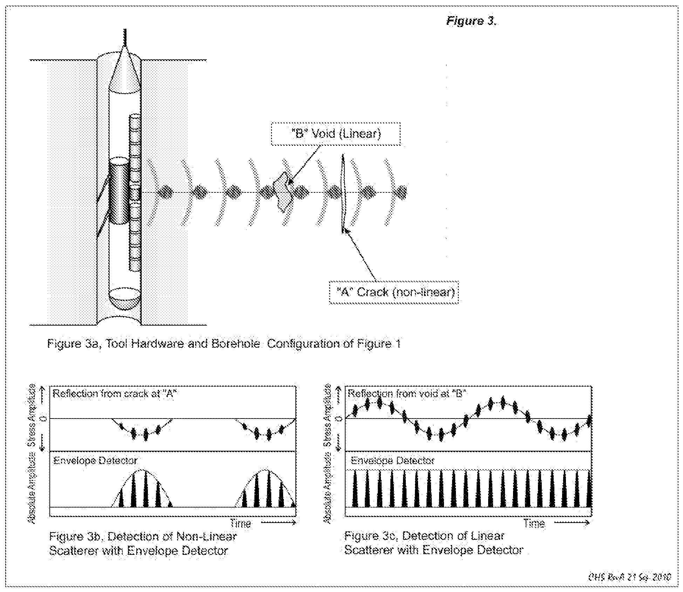

Figures 3a-3c show an example detection process, based on envelope detection, used to distinguish between linear and nonlinear scatters. Figure 3a shows an arrangement similar to figure 1, where a crack (nonlinear feature) is located at position "A" and a void (linear feature) is located at position "B." Figures 3b and 3c show how the detection process is used to determine if a scatterer is a crack or not. The top plot of Figure 3b shows a plot of stress (arbitrary units) versus time (arbitrary units) and the bottom plot of Figure 3b shows a plot of amplitude (arbitrary units) versus time (arbitrary units) for signals returned from the crack located at position "A" where the low frequency signal has been removed by application of a high-pass filter. The top plot of Figure 3c shows a plot of stress (arbitrary units) versus time (arbitrary units) and the bottom plot of Figure 3c shows a plot of amplitude (arbitrary units) versus time (arbitrary units) for signals returned from the void located at position "B." The top plot of Figure 3b shows the reflected and detected low frequency vibration with the high frequency pulses sitting atop of it. The bottom plot of Figure 3b shows the same signal as the top plot of Figure 3b after the signal has been high-pass filtered to eliminate the low frequency wave. A time amplitude modulated returned signal indicates that a nonlinear feature has been detected. For a linear feature, such as the void at position "B," if the same procedure is applied, there is no modulation of the amplitude in the reflected pulses from the linear feature.

In some aspects, a two-way time delay from the reflector, whether linear or nonlinear, can be obtained by standard cross-correlation of the source pulse with the reflected pulse. In this aspect, the first sequence of high frequency pulses can be either chirped or coded or both chirped and coded. Moreover, the first sequence of high frequency pulses can be modulated, wherein the modulation can include a modulation of an amplitude, a phase or a period of the pulse. If the linear velocity of the medium is known from other borehole measurement techniques, the distance to the nonlinear feature can be obtained. In some aspects, where the high frequency pulses are substantially nondirectional, the azimuth of the reflector can be obtained by decomposition of the signals recorded by three component receivers. Repetition of the above steps at a given depth for different azimuths of the stringer and at different depths will provide a 3D image of the scattering structure and distinguish which scatterers are linear and which are not.

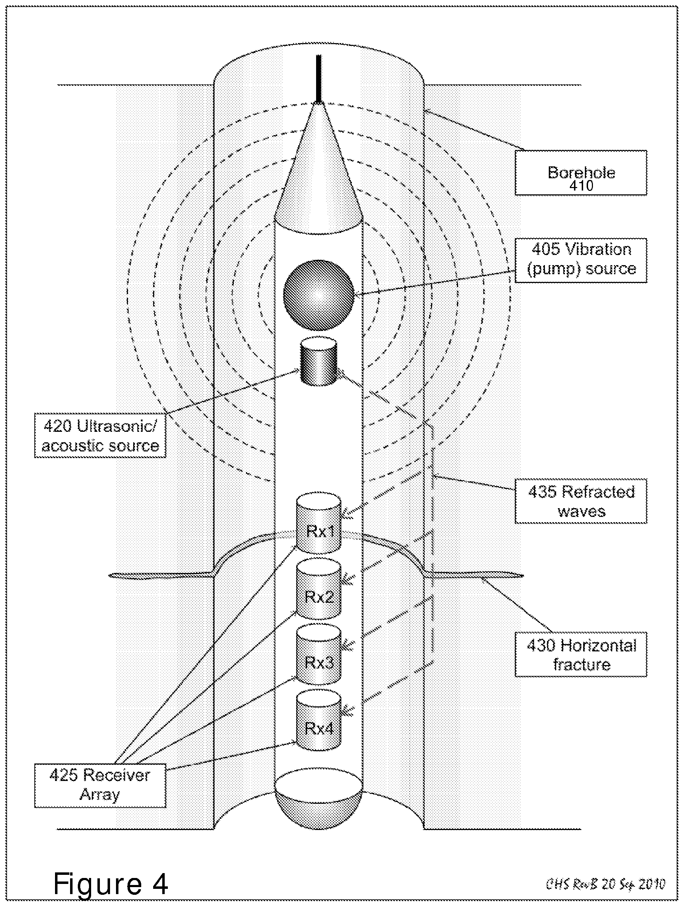

Figure 4 shows an example arrangement for investigating cracks and other damage that are oriented perpendicular or substantially perpendicular to the borehole. In this aspect, probing and imaging nonlinear features that can be sensed by refracted waves running parallel to the borehole, for instance cracks oriented perpendicular to the borehole. As in the arrangement of Figure 1, the borehole can be drilled in a variety of inclinations, such as vertical, inclined or horizontal, and embedded in a rock formation. Material surrounding borehole 410 can include damage 430 that runs perpendicular or substantially perpendicular to borehole 410. As used herein, the term "substantially perpendicular" will mean almost perpendicular, but diverging or converging slightly. One or more transducers 405 are arranged to generate a low frequency or "pump" wave and oriented such that the wave propagates along the longitudinal axis of borehole 410. The low frequency wave or vibration can propagate upward/downward along the longitudinal axis of borehole 410 as tube or refracted waves. As in the arrangement of Figure 1, since the low frequency waves propagate along the borehole, flexibility in the disposition of transducer 405 within borehole 410 is feasible, as long as the low frequency wave induces a small elastic nonlinearity next to borehole 410 in the material as a result of particle motion in the surrounding material parallel to the borehole axis. In some aspects, transducer 405 are arranged to generate the low frequency wave intermittently, such that transducer 405 will have time periods when it is actively generating the low frequency wave and time periods when it is not actively generating the low frequency wave. The cycle time for transducer 405 can be controlled to optimize the operation of this arrangement

One or more transducers 420 can be arranged longitudinally within borehole 410 to generate a sequence of high frequency pulses, or "probe" pulses, contemporaneously with the low frequency wave. In some aspects, transducer 420 can operate continuously during operation of this arrangement. In some aspects, the sequence of high frequency pulses can be a compressional and/or shear wave source. Transducers 420 can be arranged to operate with a repetition rate of at least 10 times for each pump wave cycle, emits bursts of high frequency, 10-1000 times that of the pump. These high frequency pulses propagate parallel or longitudinally to borehole 410 and as both refracted and direct waves, as well as scattered waves in material. The refracted probe pulses traveling parallel to the borehole within material are of particular interest in this aspect. If the pump wave has sufficient amplitude to induce crack nonlinearity (generally greater than $10^{-6}$ strain amplitude, but increased effective pressure requires larger dynamic wave strain amplitudes), the pump wave will cause existing cracks or fissures in material that are oriented approximately perpendicular to borehole 410 to exhibit strongly non-linear behavior in addition to any inherent non-linearity of the material itself. Transducer 420 can be arranged to emit a sequence of bursts or pulses to probe for nonlinearity induced by the low frequency waves generated by transducer 405. If a crack is present it creates what is known as a softening nonlinearity. The softening nonlinearity is manifest by wave harmonics, but more importantly, by local changes in formation velocity during the dilatational part of the low frequency cycle from transducer 420 to receiver 425. Changes in velocity are used to infer the presence of a crack. Normally, during the compressional phase, the wave velocity sensed by the probe pulses decreases proportionally to the amplitude and phase of the low frequency wave. In most instances, cracks and/or rocks may undergo softening nonlinearity induced by the interaction of the pump wave on the features that may experience the non-linear behavior. This means that for the pump wave minimum amplitude (zero phase, amplitude equals zero) there is no change in velocity. The velocity decrease is progressively larger as the pump wave phase approaches the compression maximum amplitude. During the dilatational phase, the wave velocity progressively increases as the pump wave approaches maximum dilation amplitude. When cracks are present the velocity changes during the dilatational cycle are more pronounced and can be used to determine if cracks are present. In other instances, the cracks and/or rocks may undergo a hardening nonlinearity where the low frequency compression phase causes the probe pulses to increase in speed as they traverse the features undergoing the nonlinear response. The velocity changes are measured relative to pulse propagation velocities measured with the low-frequency pump source silent. This measurement gives the linear wavespeed of the formation from source to receiver(s).

One or more receivers 425 can be arranged within borehole 410 to record the vibration signal plus the ultrasonic pulses. Although four receivers are shown (Rx1, Rx2, Rx3 Rx4), this is only illustrative since more or fewer than four may be used. Receivers 425 can be locked to the borehole side or not, and individual elements of the array may record three components so that azimuth can be inferred. If more receivers are used, a longer portion of borehole 410 can be probed using the multiple receivers. In instances where more than one receiver is used, the change in wave speed and therefore the nonlinearity can be determined from successive receiver pairs. This can be done by correlating one receiver with another receiver during a pump wave cycle where each preceding receiver can be treated as a reference to obtain the nonlinearity between itself and the next receiver,

In this arrangement, a relative change in velocity between the presence of cracks can be determined and used to distinguish cracks from other reflecting interfaces such as formation boundaries, because only cracks create the strong nonlinear effect on velocity that depends on pump amplitude. The nonlinear attenuation can also be used as redundant information for inferring the presence of a crack. Pump wave harmonics can be used in addition to velocity and attenuation changes to aid in the determination of the presence of cracks and formation nonlinearity.

Processing the sequence of the high frequency refracted arrival pulse signals recorded by receiver 425 can give the full elastic nonlinear response of the formation near the borehole for a given wave path.

The signal processing requires measuring a pulse signal obtained without the vibration source. This signal gives the linear time delay and velocity of the medium since the distance between the source and receivers are known. This signal is cross-correlated with each signal of the sequence of pulse signals emitted when the vibration is in the formation.

The correlation output gives the change in velocity with vibration pressure. Since the wave path length is known from pulse source to receivers, and assuming a medium density obtained from other borehole logging procedures, the modulus as a function of pressure can be obtained. From this pressure derivative, the total nonlinearity of the medium can be obtained by using a model, for instance the Preisach-Mayergoyz (PM) space theory of elasticity as is known in the art. Other suitable models may also be used.

Repetition of the above steps at a given depth for different azimuths and frequencies within borehole 410 and at different depths can provide a 3D annular image of the velocity and modulus, and nonlinear velocity and modulus of the formation. In particular, cracks oriented perpendicular to the borehole will give a large nonlinear signature. This arrangement can determine all the nonlinear moduli simultaneously including the nonlinear moduli in tension and compression.

Operation of this arrangement is similar to applying a quasistatic, progressively increasing load while time-of-flight is measured across or along the sample at each load interval. This allows dynamic strains ($10^{-9}$ - $10^{-5}$) to be explored and both tension and compression can be probed and the entire material nonlinearity is measured at once. The higher order nonlinearity is hysteretic in nature and very sensitive to the effects of fluids and mechanical damage.

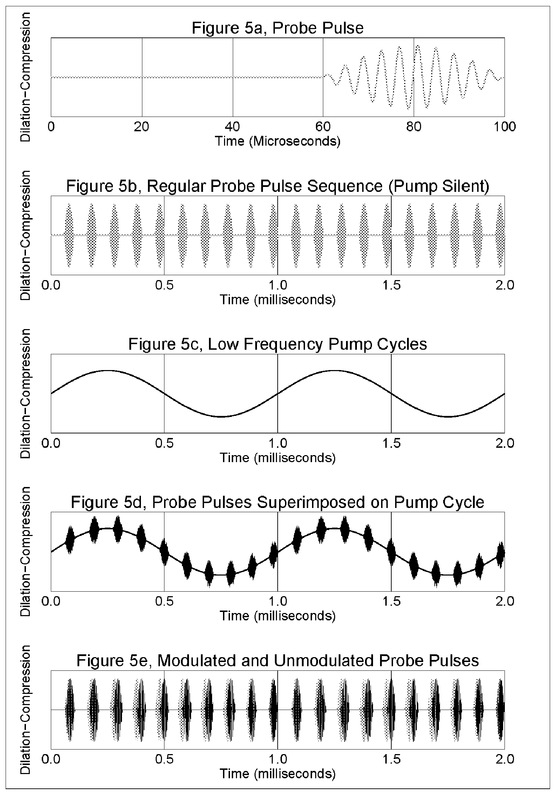

Figures 5a to 5e show an example graphic illustration of the operation of the arrangement of Figure 4. In this example, ultrasonic velocity and vibrational strain modulation are shown. Figure 5a shows an individual pulse, and figure 5b shows a regular sequence of compressional high frequency pulses that can be emitted from transducer 420. If the pump source is silent, a similar regular sequence of pulses may be recorded at any of the elements of receiver array 425. Figure 5c shows two periods of a low frequency vibration that can be generated by the compressional source 405. In this example the portion of the vibration having a positive amplitude on the figure is a compressional phase of the vibration and the portion of the vibration have a negative amplitude is a dilatational phase of the vibration. The summation of the two emitted signals of Figures 5b and 5c, depicted as figure 5d, is recorded at receiver 425. Since the speed of refracted waves 435 varies through the pump wave cycle, the received refracted pulses do not arrive regularly because their velocity varies with compressional and dilatational strain. Wave speed can be measured throughout a vibration cycle in both tension and compression in this manner. Similar recordings are made at the individual elements of receiver array 425. The recorded wave train of figure 5d may be filtered to remove the low frequency wave of 5c, leaving the irregular pulse sequence colored black on figure 5e. The regular pulse sequence of figure 5c is shown for reference, shaded gray, to highlight the modulation of the receiver pulse sequence. During compression, the ultrasonic wave decreases in velocity with a minimum at the peak pump compression. The maximum velocity is measured during peak dilatation. The above discussion is relevant for softening nonlinearity; however, as described above, certain material may undergo hardening nonlinearity where the pump compression cause the probe pulses to increase in speed. In this hardening case, the plots would indicate velocity changes in the opposite sense. From wave speed change through a wave strain cycle, all of the nonlinear coefficients may be defined. Multiple vibration cycles provide very good accuracy and precision of the change in wave speed with strain and therefore in the determination of the nonlinear coefficients.

The total time delay is, TDtotal(i) = TD(i) - TD(1), where TDtotal(i) are the sequence of ultrasonic pulses obtained through a pump wave cycle. The delay of each is obtained by applying cross-correlation using the reference signal TD(1). The wave velocity c is,

$$c = \sqrt{\frac{M}{\rho}} = \frac{L}{TD}$$

(1)

where $M = K + 4/3\mu$ and L is propagation distance, TD the elapsed time, M, K and $\mu$ are the compressional, bulk and shear moduli, and $\rho$ the bulk density of the medium. For small amplitude/velocity variations,

$$\frac{\Delta c}{c_0} = -\frac{\Delta TD}{TD_0} + \frac{\Delta L}{L_0} = \frac{\Delta M}{2M_0} - \frac{\Delta \rho}{2\rho_0}$$

(2)

where

$$\Delta TD \equiv TDtotal \cong -\frac{TD_0}{2}\frac{\Delta M}{M_0} \approx \frac{L}{2\rho_0 c_0^3}\Delta M$$

(3)

and

$$\frac{\Delta M}{M_0} = -\beta \varepsilon_{LF} - \delta \varepsilon_{LF}^2 - \alpha \left( \Delta \varepsilon_{LF} + \varepsilon_{LF} sign\left( \dot{\varepsilon}_{LF} \right) \right)$$

(4)

where $\alpha$ is the hysteretic nonlinear parameter, $\varepsilon_{LF}$ is the instantaneous strain of the pump wave, and $\dot{\varepsilon}_{LF}$ is the instantaneous strain derivative with time, $\Delta \varepsilon_{LF}$ is the maximum strain excursion in a cycle and where $\beta$ and $\delta$ are the third and fourth order nonlinear coefficients, respectively and $sign(\dot{\varepsilon}_{LF})$ is from the sign of the strain derivative, and details of which can be found in Renaud, G., S. Callé,, and M. Defontaine, Remote dynamic acoustoelastic testing: Elastic and dissipative nonlinearities measured under hydrostatoc tension and compression and Van Den Abeele, K. E.-A., A. Sutin, J. Carmeliet, and P. Johnson, Micro-damage diagnostics using nonlinear elastic wave spectroscopy (NEWS), NDT&E International 34, 239-248 (2001).

By applying this arrangement at each depth and azimuth with borehole 410, the full nonlinearity of the near-borehole may be obtained, and by standard imaging methods that may be based on refraction of waveform migration, a nonlinear image of the near-borehole region may be obtained.

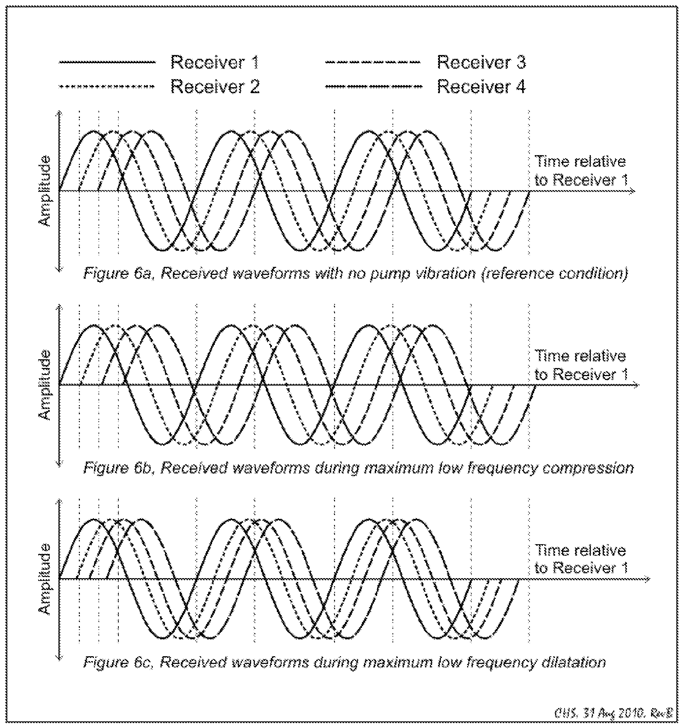

Figure 6a to 6c show an example of received signals for the arrangement of Figure 4 in the case of softening non-linearity. The material around the borehole has constant properties over the vertical extent of the receiver array 425, and a very thin open fracture 430 crosses the borehole. Figure 6a shows an amplitude verses time plot for signals received by receiver 425 when transducer 405 is silent. Figure 6b shows an amplitude verses time plot for signals received by receiver 425 during maximum low frequency compression. Figure 6c shows an amplitude verses time plot for signals received by receiver 425 during maximum low frequency dilatation. For the three plots, the time axis is with respect to receiver Rx1. To simplify the following discussion, the amplitude loss due to attenuation is ignored. At the reference condition, shown in Figure 6a, with transducer 405 silent, assuming homogeneous rock and that the fracture does not influence the rock stiffness, all returned signals will be displaced relative to each other by an amount related to the rock velocity and receiver spacing. During the compression part of the pump wave cycle, as shown in Figure 6b, there is a decrease in wave speed through the material as it softens (exhibiting softening nonlinearity) so the time lag between successive signal increases. During the dilatation part of the cycle, as shown in Figure 6c, there is an increase in wave speed through the material so the time delay between successive receivers decreases slightly. During the compressional part of the cycle, there is a decrease in wavespeed through the materials so the time delay between successive receivers increases slightly.

The various arrangements described in detail above can be used in many applications derived from imaging around the borehole. For example, the above-described acoustic beam sources can be used for various evaluation of natural fractures, mapping of vugs, nodules or other inhomogeneities, evaluation of the presence and properties of the cement sheath between one or more casing strings and the formation around a cased well, mapping fluid invasion from the borehole and assessment of the mechanical integrity of the formation around the wellbore, in particular any alteration or localized mechanical damage caused by the near wellbore stress concentration.

Although the invention has been described in detail for the purpose of illustration based on what is currently considered to be a variety of useful embodiments, it is to be understood that such detail is solely for that purpose and that the invention is not limited to the disclosed embodiments, but, on the contrary, is intended to cover modifications and equivalent arrangements that are within the scope of the appended claims. For example, though reference is made herein to a computer, this may include a general purpose computer, a purpose-built computer, an ASIC including machine executable instructions and programmed to execute the methods, a computer array or network, or other appropriate computing device. For example, the data collected by the receivers could undergo some processing and are either stored in memory in the tool, or transmitted up hole for further processing and storage. As a further example, it is to be understood that the present invention contemplates that, within the scope of the claims, one or more features of any embodiment can be combined with one or more features of any other embodiment.

## Claims

1.  A method for investigating material (115) surrounding a borehole (110), the method comprising:

    generating a first lower frequency acoustic wave within the borehole (110), wherein the first lower frequency acoustic wave induces a linear distortion and a nonlinear distortion in one or more inhomogeneity features in the material (115) that are substantially perpendicular to a radius of the borehole;
    directing a first sequence of higher frequency pulses in a direction perpendicular with respect to the longitudinal axis of the borehole (110) into the material (115) contemporaneously with the first acoustic wave; and
    receiving at one or more receivers (125) positionable in the borehole (110) one or more second higher frequency pulses produced by an interaction between the first sequence of higher frequency pulses and the one or more features undergoing the linear distortion and the nonlinear distortion due to the first lower frequency acoustic wave,

    wherein:

    the first lower frequency acoustic wave has alternating compressional and dilatational phases; **characterised in that** the method comprises distinguishing between a crack present in the material (115) and other said inhomogeneity features present in the material (115) based on whether the one or more second higher frequency pulses are received dependent on the phase of the first lower frequency acoustic wave; and
    the second higher frequency pulses are received at the one or more receivers (125) if the first sequence of higher frequency pulses encounters the one or more inhomogeneity features within the material (115) that are oriented such that they direct energy back to the borehole (110) while undergoing the distortion due to the first lower frequency acoustic wave such that the distortion alters a contrast in acoustic impedance during a cycle of the lower frequency acoustic wave.

2. The method according to claim 1, wherein the one or more receivers are configured to record one or more directional components of the one or more second higher frequency pulses.

3. The method according to claim 1, further comprising repeating the generating the first acoustic wave and the directing the first sequence of higher frequency pulses at different azimuth orientations and at different depths within the borehole to produce three-dimensional images of linear and nonlinear elastic features of the material surrounding the borehole.

4. The method according to claim 1, wherein the received second higher frequency pulses have properties that depend on a phase of the lower frequency wave at a location and a time at which the first sequence of higher frequency pulses are reflected by the material.

5. The method according to claim 1, further comprising determining whether the material includes a linear reflector or a nonlinear reflector based on the received one or more second higher frequency pulses.

6. The method according to claim 5, further comprising filtering the received one or more second higher frequency pulses.

7. The method according to claim 6, wherein the filter includes a high pass filter that is arranged to isolate higher frequency components from the received one or more second higher frequency pulses.

8. The method according to claim 6, further comprising determining an amplitude change with time of the filtered one or more second higher frequency pulses.

9. The method according to claim 1, wherein the first sequence of higher frequency pulses are chirped or coded or both chirped and coded or modulated, and the modulation is selected from the group consisting of: amplitude, phase, period and any combination thereof.

10. The method according to claim 1, wherein between five and 100 first frequency pulses are emitted per cycle of the lower frequency wave, and the first higher frequency pulses have a frequency at least ten times a frequency of the lower frequency wave.

11. The method according to claim 1, further comprising determining a radial distance to the one or more features based upon a first time at which the first sequence of higher frequency pulses were transmitted, a second time at which the second sequence of higher frequency pulses where received and an estimated velocity of sound along the path of the first sequence of higher frequency pulses and along the path of the second higher frequency pulses.

12. The method according to claim 11, wherein the determining includes computing a cross-correlation of the first sequence of higher frequency pulses and the second higher frequency pulses.

13. An apparatus (130) for investigating material surrounding a borehole (110), the apparatus comprising:

a first acoustic wave source (105) positionable in the borehole and configured to generate a first acoustic wave having a lower frequency into the material (115) to induce a linear distortion and a nonlinear distortion in one or more inhomogeneity features in the material (115) that are substantially parallel to a longitudinal axis of the borehole (110);
a source (120) positionable in the borehole and configured to direct a first sequence of higher frequency pulses in a perpendicular direction relative to the longitudinal axis of the borehole (110) into the material (115) contemporaneously with the first acoustic wave; and
one or more receivers (125) positionable in the borehole (110) and configured to receive one or more second higher frequency pulses produced by an interaction between the first sequence of higher frequency pulses and the one or more features undergoing the linear distortion and the nonlinear distortion due to the first acoustic wave,

wherein:

the first lower frequency acoustic wave has alternating compressional and dilatational phases; **characterised in that** the apparatus (130) is configured to distinguish between a crack present in the material (115) and other said inhomogeneity features present in the material (115) based on whether the one or more second higher frequency pulses are received dependent on the phase of the first lower frequency acoustic wave; and the second higher frequency pulses are received at the one or more receivers (125) if the first sequence of higher frequency pulses encounters the one or more inhomogeneity features within the material (115) that are oriented such that they direct energy back to the borehole (110) while undergoing the distortion due to the first lower frequency acoustic wave such that the distortion alters a contrast in acoustic impedance during a cycle of the lower frequency acoustic wave.

14. The apparatus according to claim 13, wherein second higher frequency pulses are received at the one or more receivers if the first sequence of higher frequency pulses encounters the one or more inhomogeneity features within the material (115) that are oriented such that they direct energy back to the borehole (110) while undergoing the distortion due to the first lower frequency acoustic wave such that the distortion alters a contrast in acoustic impedance during a cycle of the lower frequency acoustic wave.

15. The apparatus according to claim 13, wherein the one or more receivers are configured to record one or more directional components of the one or more second higher frequency pulses.

16. The apparatus according to claim 13, further comprising a processor in communication with a memory having instructions stored therein which, when executed, is configured to determine a radial distance from the borehole to the one or more features based on the velocity of sound along the path of the first sequence of higher frequency pulses and along the path of the second higher frequency pulses.

17. The apparatus according to claim 13, further comprising a processor in communication with a memory having instructions stored therein which, when executed, is configured to produce one or more three-dimensional images of the material based on repeated acoustic wave penetrations into the material at different azimuth orientations and at different depths within the borehole.

18. The apparatus according to claim 13, further comprising a processor in communication with a memory having machine executable instructions stored therein which, when executed, causes the processor to determine whether the material includes a linear reflector or a nonlinear reflector based on the received one or more second higher frequency pulses.

19. The apparatus according to claim 18, further comprising a filter arranged to filter the received one or more second higher frequency pulses.

20. The apparatus according to claim 19, wherein the filter includes a high pass filter that is arranged to isolate higher frequency components from the received one or more second higher frequency pulses.

21. The apparatus according to claim 19, wherein the processor is arranged to determine an amplitude change with time of the filtered one or more second higher frequency pulses.

22. The apparatus according to claim 18, further comprising an encoder arranged to encode the first sequence of higher frequency pulses with a time-varying signature by introducing a time varying component including chirping or frequency sweeps or modulating in amplitude, phase, period and any combination thereof.

23. The apparatus according to claim 13, wherein the processor uses the encoded first sequence of higher frequency pulses to measure a time-of-flight between the first sequence and the received second sequence.

24. The apparatus according to claim 13, wherein between five and 100 first frequency pulses are emitted per cycle of the lower frequency wave, and the first higher frequency pulses have a frequency at least ten times a frequency of the lower frequency wave.

25. The apparatus according to claim 18, wherein the radial distance is determined by computing a cross-correlation in a time domain of the first sequence of higher frequency pulses and the second higher frequency pulses.

26. The apparatus according to claim 25, wherein the processor is arranged to determine a radial distance to the material based upon a first time at which the first sequence of higher frequency pulses were transmitted, a second time at which the second sequence of higher frequency pulses where received and an estimated velocity of sound of the material.

27. A method for investigating material surrounding a borehole, the method comprising:

generating within a borehole an intermittent lower frequency vibration that propagates as a tube wave longitudinally to the borehole and induces a nonlinear distortion in one or more inhomogeneity features (430) in the material that are substantially perpendicular to a longitudinal axis of the borehole;
generating within the borehole a sequence of higher frequency pulses directed such that they travel longitudinally to the borehole within the surrounding material; and
receiving, at one or more receivers (425) positionable in the borehole, a signal that includes components from the lower frequency vibration and the sequence of higher frequency pulses during intermittent generation of the lower frequency vibration, **characterised in that** the method comprises distinguishing between a crack present in the material and other said inhomogeneity features present in the material based on pulse propagation velocity changes associated with the sequence of higher frequency pulses measured when said lower frequency vibration causes the tube wave to propagate relative to pulse propagation velocities associated with the sequence of higher frequency pulses measured when said lower frequency vibration is silenced.

28. The method according to claim 27, wherein the one or more receivers are configured to record one or more directional components of the sequence of higher frequency pulses.

29. The method according to claim 27, further comprising repeating the generating the lower frequency vibration and the sequences of higher frequency pulses at different azimuth orientations and at different depths within the borehole to produce one or more images of the material selected from the group consisting of: a linear velocity, a linear modulus, a nonlinear velocity, a nonlinear modulus, and combinations thereof

30. The method according to claim 27, wherein an elastic distortion cycle caused by the lower frequency vibration results in a corresponding cyclical variation in local velocity in the material.

31. The method according to claim 27, further comprising processing a sequence of higher frequencies pulses returned to the one or more receivers from the material to determine an elastic nonlinear response of the material.

32. An apparatus for investigating material surrounding a borehole, the apparatus comprising:

a first acoustic wave source (405) configured to generate within a borehole an intermittent lower frequency vibration that propagates as a tube wave longitudinally to the borehole and induces a nonlinear distortion in one or more features in the material that are substantially perpendicular to a longitudinal axis of the borehole;
a second acoustic wave source (420) configured to direct a continuous sequence of higher frequency pulses such that they travel longitudinally to the borehole within the material; and
one or more receivers (425) positionable in the borehole and configured to receive a signal that includes components from the lower frequency vibration and the sequence of higher frequency pulses during intermittent generation of the lower frequency vibration, **characterised in that** the apparatus is configured to distinguish between a crack present in the material and other said inhomogeneity features present in the material based on pulse propagation velocity changes associated with the sequence of higher frequency pulses measured when said lower frequency vibration causes the tube wave to propagate relative to pulse propagation velocities associated with the sequence of higher frequency pulses measured when said first acoustic wave source (405) is silenced.

33. The apparatus according to claim 32, wherein the one or more receivers are configured to record one or more directional components of the sequence of higher frequency pulses.

34. The apparatus according to claim 32, further comprising a controller configured to repeat the generation of the lower frequency vibration and the sequences of higher frequency pulses at different azimuth orientations and at different depths within the borehole to produce one or more images of the material selected from the group consisting of: a linear velocity, a linear modulus, a nonlinear velocity, a nonlinear modulus, and combinations thereof.

35. The apparatus according to claim 32, wherein an elastic distortion cycle of the lower frequency vibration generated by the first acoustic wave source results in a corresponding cyclical variation in local velocity in the material.

36. The apparatus according to claim 32, further comprising a processor in communication with a memory having machine executable instructions stored therein which, when executed cause the processor to determine an elastic nonlinear response of the material based on a sequence of higher frequencies pulses returned to the one or more receivers from the material.

**Patentansprüche**

1. Verfahren zum Erforschen eines Materials (115) in der Umgebung eines Bohrlochs (110), das Verfahren umfassend

   Erzeugen einer ersten akustischen Welle mit niedrigerer Frequenz innerhalb des Bohrlochs (110), wobei die erste akustische Welle mit niedrigerer Frequenz eine lineare Verzerrung und eine nicht lineare Verzerrung in einem oder mehreren Inhomogenitätsmerkmalen des Materials (115) hervorruft, die im Wesentlichen rechtwinklig zu einem Radius des Bohrlochs sind;
   Ausrichten einer ersten Sequenz Impulse mit höherer Frequenz in eine Richtung, rechtwinklig gegenüber der Längsachse des Bohrlochs (110) in das Material (115), gleichzeitig mit der ersten akustischen Welle; und
   Empfangen an einem oder mehreren Empfängern (125), die im Bohrloch (110) angeordnet werden können, eines oder mehrerer Impulse mit höherer Frequenz, hergestellt durch eine Interaktion zwischen der ersten Sequenz Impulse mit höherer Frequenz und dem einen oder den mehreren Merkmalen, die wegen der ersten akustischen Welle mit niedrigerer Frequenz die lineare und die nicht lineare Verzerrung erfahren, worin
   die erste akustische Welle mit niedrigerer Frequenz abwechselnd Kompressions- und Ausdehnungsphasen hat;
   **dadurch gekennzeichnet, dass**
   das Verfahren unterscheidet zwischen einem im Material (115) vorhandenen Riss und weiteren der im Material (115) vorhandenen Inhomogenitätsmerkmale, auf der Grundlage, ob der eine oder die mehreren zweiten Impulse mit höherer Frequenz empfangen werden, abhängig von der Phase der ersten akustischen Welle mit niedrigerer Frequenz; und
   die zweiten Impulse mit höherer Frequenz an dem einen oder den mehreren Empfängern (125) empfangen werden, wenn die erste Sequenz Impulse mit höherer Frequenz dem einen oder den mehreren Inhomogenitätsmerkmalen innerhalb des Materials (115) begegnen, die so orientiert sind, dass sie Energie zurück in das Bohrloch (110) leiten, während sie die Verzerrung wegen der ersten akustischen Welle mit niedrigerer Frequenz erfahren, so dass die Verzerrung einen Kontrast in akustischer Impedanz während eines Zyklus der akustischen Welle mit niedrigerer Frequenz verändern.

2. Verfahren gemäß Anspruch 1, wobei der eine oder die mehreren Empfänger ausgelegt sind zum Speichern einer oder mehrerer direktionaler Komponenten des einen oder der mehreren zweiten Impulse mit höherer Frequenz.

3. Verfahren gemäß Anspruch 1, zudem umfassend Wiederholen des Erzeugens der ersten akustischen Welle und des Ausrichtens der ersten Sequenz Impulse mit höherer Frequenz mit unterschiedlichen Azimut-Orientierungen und an unterschiedlichen Tiefen innerhalb des Bohrlochs zum Herstellen von dreidimensionalen Bildern von linearen und nicht linearen elastischen Merkmalen des Materials in der Umgebung des Bohrlochs.

4. Verfahren gemäß Anspruch 1, wobei die empfangenen zweiten Impulse mit höherer Frequenz Eigenschaften haben, die von einer Phase der Welle mit niedrigerer Frequenz abhängen, an einem Ort und einer Zeit, an denen die erste Sequenz Impulse mit höherer Frequenz vom Material reflektiert werden.

5. Verfahren gemäß Anspruch 1, zudem umfassend Bestimmen, ob das Material einen linearen Reflektor oder einen nicht linearen Reflektoren aufweist, auf der Grundlage des oder der empfangenen ein oder mehreren zweiten Impulse mit höherer Frequenz.

6. Verfahren gemäß Anspruch 5, zudem umfassend Filtern des oder der empfangenen ein oder mehreren zweiten Impulse mit höherer Frequenz.

7. Verfahren gemäß Anspruch 6, wobei der Filter einen Hochpassfilter umfasst, der so angeordnet ist, dass er Komponenten mit höherer Frequenz von dem einen oder den mehreren zweiten Impulsen mit höherer Frequenz isoliert.

8. Verfahren gemäß Anspruch 6, zudem umfassend Bestimmen einer Amplitudenänderung über die Zeit des oder der gefilterten einen oder mehreren zweiten Impulse mit höherer Frequenz.

9. Verfahren gemäß Anspruch 1, wobei die erste Sequenz Impulse mit höherer Frequenz linear moduliert sind oder codiert oder sowohl linear moduliert als auch codiert sind oder moduliert, und wobei die Modulation ausgewählt ist aus der Gruppe Amplitude, Phase, Periode und Kombinationen davon.

10. Verfahren gemäß Anspruch 1, wobei zwischen fünf und 100 erste Frequenzimpulse pro Zyklus der Welle mit niedrigerer Frequenz emittiert werden, und wobei die ersten Impulse mit höherer Frequenz eine Frequenz haben, die mindestens zehnmal die Frequenz den Welle mit niedrigerer Frequenz ist.

11. Verfahren gemäß Anspruch 1, zudem umfassend Bestimmen einer radialen Entfernung zum einen oder den mehreren Merkmalen auf Grundlage einer ersten Zeit, zu der die erste Sequenz Impulse mit höherer Frequenz übertragen wurde, einer zweiten Zeit, zu der die zweite Sequenz Impulse mit höherer Frequenz empfangen wurden und einer geschätzte Schallgeschwindigkeit auf dem Pfad der ersten Sequenz Impulse mit höherer Frequenz und entlang des Pfads der zweiten Impulse mit höherer Frequenz.

12. Verfahren gemäß Anspruch 11, wobei das Bestimmen einschließt Berechnen einer Kreuzkorrelation der ersten Sequenz Impulse mit höherer Frequenz und der zweiten Impulse mit höherer Frequenz.

13. Vorrichtung (130) zum Erforschen eines Materials in der Umgebung eines Bohrlochs (110), die Vorrichtung umfassend

einer erste Quelle akustischer Wellen (105), positionierbar im Bohrloch und ausgelegt zum Erzeugen einer ersten akustischen Welle mit niedrigerer Frequenz in das Material (115) zum Hervorrufen einer linearen Verzerrung und einer nicht linearen Verzerrung in einem oder mehreren Inhomogenitätsmerkmalen im Material (115), die im Wesentlichen parallel zu einer Längsachse des Bohrlochs sind;

eine Quelle (120), positionierbar im Bohrloch und ausgelegt zum Ausrichten einer ersten Sequenz Impulse mit höherer Frequenz in eine Richtung, rechtwinklig gegenüber der Längsachse des Bohrlochs (110) in das Material (115), gleichzeitig mit der ersten akustischen Welle; und

einen oder mehrere Empfänger (125), positionierbar die im Bohrloch (110), und ausgelegt zum Empfang eines oder mehrerer Impulse mit höherer Frequenz, hergestellt durch eine Interaktion zwischen der ersten Sequenz Impulse mit höherer Frequenz und dem einen oder den mehreren Merkmalen, die wegen der ersten akustischen Welle mit niedrigerer Frequenz die lineare und die nicht lineare Verzerrung erfahren,

worin

die erste akustische Welle mit niedrigerer Frequenz abwechselnd Kompressions- und Ausdehnungsphasen hat;
**dadurch gekennzeichnet, dass**

die Vorrichtung (130) ausgelegt ist zum Unterscheiden zwischen einem im Material (115) vorhandenen Riss und weiterer der im Material (115) vorhandenen Inhomogenitätsmerkmale, auf der Grundlage ob der eine oder die mehreren zweiten Impulse mit höherer Frequenz empfangen werden, abhängig von der Phase der ersten akustischen Welle mit niedrigerer Frequenz; und

die zweiten Impulse mit höherer Frequenz an dem einen oder den mehreren Empfängern (125) empfangen werden, wenn die erste Sequenz Impulse mit höherer Frequenz dem einen oder den mehreren Inhomogenitätsmerkmale begegnet, die so orientiert sind, dass sie Energie zurück in das Bohrloch (110) leiten, während sie die Verzerrung wegen der ersten akustischen Welle mit niedrigerer Frequenz erfahren, so dass die Verzerrung einen Kontrast in akustischer Impedanz während eines Zyklus der akustischen Welle mit niedrigerer Frequenz verändern.

14. Vorrichtung gemäß Anspruch 13, wobei zweite Impulse mit höherer Frequenz an dem einen oder den mehreren Empfängern empfangen werden, wenn die erste Sequenz Impulse mit höherer Frequenz den einen oder den mehreren Inhomogenitätsmerkmale begegnet, die so orientiert sind, dass sie Energie zurück in das Bohrloch (110) leiten, während sie die Verzerrung wegen der ersten akustischen Welle mit niedrigerer Frequenz erfahren, so dass die Verzerrung einen Kontrast in akustischer Impedanz während eines Zyklus der akustischen Welle mit niedrigerer Frequenz verändern.

15. Vorrichtung gemäß Anspruch 13, wobei der eine oder die mehreren Empfänger ausgelegt sind zum Speichern einer oder mehrerer direktionaler Komponenten des einen oder der mehreren zweiten Impulse mit höherer Frequenz.

16. Vorrichtung gemäß Anspruch 13, zudem umfassend einen Prozessor in Verbindung mit einem Speicher mit darauf abgelegten Instruktionen, die, wenn ausgeführt, ausgelegt sind zum Bestimmen einer radialen Entfernung vom Bohrloch zum einen oder den mehreren Merkmalen auf Grundlage der Schallgeschwindigkeit entlang des Pfads der ersten Sequenz Impulse mit höherer Frequenz und entlang des Pfads der zweiten Impulse mit höherer Frequenz.

**17.** Vorrichtung gemäß Anspruch 13, zudem umfassend einen Prozessor in Verbindung mit einem Speicher mit darauf abgelegten Instruktionen, die, wenn ausgeführt, ausgelegt sind zum Herstellen eines oder mehrerer dreidimensionaler Bilder des Materials auf der Grundlage von wiederholten akustischen Wellenpenetrationen in das Material an unterschiedlichen Azimut-Orientierungen und an unterschiedlichen Tiefen innerhalb des Bohrlochs.

**18.** Vorrichtung gemäß Anspruch 13, zudem umfassend einen Prozessor in Verbindung mit einem Speicher mit darauf abgelegten ausführbaren Instruktionen, die, wenn ausgeführt, den Prozessor dazu veranlassen zu bestimmen, ob das Material einen linearen Reflektor oder einen nicht linearen Reflektor aufweist, auf der Grundlage des oder der empfangenen ein oder mehreren zweiten Impulse mit höherer Frequenz.

**19.** Vorrichtung gemäß Anspruch 18, zudem umfassend einen Filter, ausgelegt zum Filtern des oder der empfangenen ein oder mehreren zweiten Impulse mit höherer Frequenz.

**20.** Vorrichtung gemäß Anspruch 19, wobei der Filter einen Hochpassfilter umfasst, der so angeordnet ist, dass er Komponenten mit höherer Frequenz von dem einen oder den mehreren zweiten Impulsen mit höherer Frequenz isoliert.

**21.** Vorrichtung gemäß Anspruch 19, wobei der Prozessor angeordnet ist zum Bestimmen einer Amplitudenänderung über die Zeit des oder der gefilterten einen oder mehreren zweiten Impulse mit höherer Frequenz.

**22.** Vorrichtung gemäß Anspruch 18, zudem umfassend eine Codiereinrichtung, angeordnet zum Codieren der ersten Sequenz Impulse mit höherer mit einer zeitvariablen Signatur durch Einführen einer zeitvariablen Komponente, einschließlich lineare Modulierung oder Frequenzhub oder Modulieren der Amplitude, Phase, Periode oder irgendeiner Kombination davon.

**23.** Vorrichtung gemäß Anspruch 13, wobei der Prozessor die codierte erste Sequenz Impulse mit höherer Frequenz verwendet zum Messen einer Flugzeit zwischen der ersten Sequenz und der empfangenen zweiten Sequenz.

**24.** Vorrichtung gemäß Anspruch 13, wobei zwischen fünf und 100 ersten Frequenzpulse pro Zyklus der Welle mit niedriger Frequenz emittiert werden, und wobei die ersten Impulse mit höherer Frequenz eine Frequenz haben, die mindestens zehnmal eine Frequenz der Welle mit niedrigerer Frequenz ist.

**25.** Vorrichtung gemäß Anspruch 18, wobei die radiale Entfernung bestimmt wird durch Berechnen einer Kreuzkorrelation in einem Zeitbereich der ersten Sequenz Impulse mit höherer Frequenz und der zweiten Impulse mit höherer Frequenz.

**26.** Vorrichtung gemäß Anspruch 25, wobei der Prozessor angeordnet ist zum Bestimmen einer radialen Entfernung zum Material auf der Grundlage einer ersten Zeit, zu der die erste Sequenz Impulse mit höherer Frequenz übertragen wurde, einer zweiten Zeit, zu der die zweite Sequenz Impulse mit höherer Frequenz empfangen wurde und einer geschätzten Schallgeschwindigkeit im Material.

**27.** Verfahren zum Erforschen eines Materials rundum ein Bohrloch, das Verfahren umfassend

Erzeugen innerhalb eines Bohrlochs einer intermittierenden Vibration mit niedrigerer Frequenz, die sich längs zum Bohrloch als Schlauchwelle ausbreitet und eine nicht lineare Verzerrung in einem oder mehreren Inhomogenitätsmerkmalen (430) im Material auslöst, die im Wesentlichen rechtwinklig zu einer Längsachse des Bohrlochs sind;
Erzeugen innerhalb des Bohrlochs einer Sequenz Impulse mit höherer Frequenz, so ausgerichtet, dass sie sich innerhalb des umgebenden Materials längs zum Bohrloch ausbreiten; und
Empfangen, an einem oder mehreren Empfängern (425) die im Bohrloch angeordnet werden können, eines Signals, das Komponenten der Vibration mit niedrigerer Frequenz und der Sequenz Impulse mit höherer Frequenz enthält, während intermittierender Erzeugung der Vibration mit niedrigerer Frequenz,
**dadurch gekennzeichnet, dass**
das Verfahren umfasst Unterscheiden zwischen einem im Material vorhandenen Riss und weiteren der im Material vorhandenen Inhomogenitätsmerkmale, auf Grundlage von Änderungen der Impulsausbreitungsgeschwindigkeit in Verbindung mit der Sequenz Impulse mit höherer Frequenz, gemessen wenn die Vibration mit niedrigerer Frequenz die Schlauchwelle veranlasst, sich auszubreiten, gegenüber Pulsausbreitungsgeschwindigkeiten in Verbindung mit der Sequenz Impulse mit höherer Frequenz, gemessen, wenn die Vibration mit niedrigerer Frequenz abgeschaltet ist.

28. Verfahren gemäß Anspruch 27, wobei der eine oder die mehreren Empfänger ausgelegt sind zum Speichern einer oder mehrerer direktionaler Komponenten der Sequenz Impulse mit höherer Frequenz.

29. Verfahren gemäß Anspruch 27, zudem umfassend Wiederholen der Erzeugung der Vibration mit niedrigerer Frequenz und der Sequenzen Impulse mit höherer Frequenz mit unterschiedlichen Azimut-Orientierungen und in unterschiedlichen Tiefen innerhalb des Bohrlochs zum Herstellen eines oder mehrerer Bilder des Materials, ausgewählt aus der Gruppe lineare Geschwindigkeit, lineares Modul, nicht lineare Geschwindigkeit, nicht lineares Modul und Kombinationen davon.

30. Verfahren gemäß Anspruch 27, wobei ein elastischer Verzerrungszyklus, herbeigeführt durch die Vibration mit niedrigerer Frequenz, in einer entsprechenden cyclischen Variation lokaler Geschwindigkeit im Material resultiert.

31. Verfahren gemäß Anspruch 27, zudem umfassend Bearbeiten einer Sequenz Impulse mit höherer Frequenz, die zu dem einen oder den mehreren Empfängern aus dem Material zurückgekommen sind, zum Bestimmen einer elastischen, nicht linearen Reaktion des Materials.

32. Vorrichtung zum Erforschen von Material rundum ein Bohrloch, die Vorrichtung umfassend

eine erste Quelle akustischer Wellen (405), ausgelegt zum Erzeugen innerhalb eines Bohrlochs einer intermittierenden Vibration mit niedrigerer Frequenz, die sich als Schlauchwelle längs zum Bohrloch ausbreitet und eine nicht lineare Verzerrung in einem oder mehreren Merkmalen im Material auslöst, die im Wesentlichen rechtwinklig zu einer Längsachse des Bohrlochs sind;
eine zweite Quelle akustischer Wellen (420), ausgelegt zum Ausrichten einer durchgehenden Sequenz Impulse mit höherer Frequenz, so, dass sie sich innerhalb des umgebenden Materials längs zum Bohrloch ausbreiten; und
einen oder mehrere Empfänger (425), die im Bohrloch angeordnet werden können, und ausgelegt zum Empfangen eines Signals, das Komponenten der Vibration mit niedrigerer Frequenz und der Sequenz Impulse mit höherer Frequenz enthält, während intermittierender Erzeugung der Vibration mit niedrigerer Frequenz, **dadurch gekennzeichnet, dass**
die Vorrichtung ausgelegt ist zum Unterscheiden zwischen einem im Material vorhandenen Riss und weiteren der im Material vorhandenen Inhomogenitätsmerkmale, auf Grundlage von Änderungen der Impulsausbreitungsgeschwindigkeit in Verbindung mit der Sequenz Impulse mit höherer Frequenz, gemessen wenn die Vibration mit niedrigerer Frequenz die Schlauchwelle veranlasst, sich auszubreiten, gegenüber Impulsausbreitungsgeschwindigkeiten in Verbindung mit der Sequenz Impulse mit höherer Frequenz, gemessen, wenn die erste Quelle akustische Wellen (405) abgeschaltet ist.

33. Vorrichtung gemäß Anspruch 32, wobei der eine oder die mehreren Empfänger ausgelegt sind zum Speichern einer oder mehrerer direktionaler Komponenten der Sequenz Impulse mit höherer Frequenz.

34. Vorrichtung gemäß Anspruch 32, zudem umfassend eine Steuerung, ausgelegt zum Wiederholen der Erzeugung der Vibration mit niedrigerer Frequenz und der Sequenzen Impulse mit höherer Frequenz mit unterschiedlichen Azimut-Orientierungen und in unterschiedlichen Tiefen innerhalb des Bohrlochs zum Herstellen eines oder mehrerer Bilder des Materials, ausgewählt aus der Gruppe lineare Geschwindigkeit, lineares Modul, nicht lineare Geschwindigkeit, nicht lineares Modul und Kombinationen davon.

35. Vorrichtung gemäß Anspruch 32, wobei ein elastischer Verzerrungszyklus, herbeigeführt durch die Vibration mit niedrigerer Frequenz, in einer entsprechenden cyclischen Variation lokaler Geschwindigkeit im Material resultiert.

36. Vorrichtung gemäß Anspruch 32, zudem umfassend einen Prozessor in Verbindung mit einem Speicher mit darauf abgelegten maschinenausführbaren Instruktionen, die, wenn ausgeführt, den Prozessor veranlassen, eine elastische, nicht lineare Reaktion des Materials zu bestimmen, auf Grundlage einer Sequenz Impulse mit höheren Frequenzen, die vom Material zu dem einen oder den mehreren Empfängern zurückgekommen sind.

**Revendications**

1. Procédé pour investiguer un matériau (115) autour d'un trou de forage (110), le procédé comprenant :

générer une première onde acoustique à fréquence plus basse à l'intérieur du trou de forage (110), où la première onde acoustique à fréquence plus basse induit une distorsion linéaire et une distorsion non linéaire dans une ou plusieurs caractéristiques d'inhomogénéité dans le matériau (115) qui sont essentiellement perpendiculaires au rayon du trou de forage ;

diriger une première séquence d'impulsions à fréquence plus élevée dans une direction perpendiculaire par rapport à l'axe longitudinal du trou de forage (110) dans le matériau (115) contemporainement avec la première onde acoustique ; et

recevoir sur un ou plusieurs récepteurs (125) positionnables dans le trou de forage (110) une ou plusieurs impulsions à fréquence plus élevée produites par une interaction entre la première séquence d'impulsions à fréquence plus élevée et l'une ou les plusieurs caractéristiques qui subissent la distorsion linéaire et la distorsion non linéaire à cause de la première onde acoustique à fréquence plus basse,

où :

la première onde acoustique à fréquence plus basse a des phases alternantes de compression et de dilatation ;

**caractérisé en ce que**

le procédé comprend distinguer entre une fissure présente dans le matériau (115) et d'autres dites caractéristiques d'inhomogénéité présentes dans le matériau (115) à base de si l'une ou les plusieurs deuxièmes impulsions à fréquence plus élevées sont reçues en dépendance de la phase de la première onde acoustique à fréquence plus basse ; et

les deuxièmes impulsions à fréquence plus élevée sont reçues à l'un ou les plusieurs récepteurs (125) si la première séquence d'impulsions à fréquence plus élevée rencontre l'une ou les plusieurs caractéristiques d'inhomogénéité dans le matériau (115) qui sont orientées telles qu'elles dirigent l'énergie de retour au trou de forage (110) pendant qu'ils subissent la distorsion à cause de la première onde acoustique à fréquence plus basse tel que la distorsion change un contraste dans l'impédance acoustique pendant un cycle de l'onde acoustique à fréquence plus basse.

2. Procédé selon la revendication 1, dans lequel l'un ou les plusieurs récepteurs sont configurés pour enregistrer une ou plusieurs composantes directionnelles de l'une ou des plusieurs deuxièmes impulsions à fréquence plus élevée.

3. Procédé selon la revendication 1, comprenant en plus répéter la génération de la première onde acoustique et la direction de la première séquence d'impulsions à fréquence plus élevée à différentes orientations de l'azimut et à différentes profondeurs à l'intérieur du trou de forage pour produire des images tridimensionnelles de caractéristiques élastiques linéaires et non linéaires du matériau autour du trou de forage.

4. Procédé selon la revendication 1, dans lequel les deuxièmes impulsions à fréquence plus élevée reçues ont des propriétés qui dépendent d'une phase de l'onde à fréquence plus basse à un endroit et un temps auquel la première séquence d'impulsions à fréquence plus élevée sont réfléchies par le matériau.

5. Procédé selon la revendication 1, comprenant en plus déterminer si le matériau inclut un réflecteur linéaire ou un réflecteur non linéaire à base des une ou plusieurs impulsions à fréquence plus élevée reçues.

6. Procédé selon la revendication 5, comprenant en plus filtrer les une ou plusieurs impulsions à fréquence plus élevée reçues.

7. Procédé selon la revendication 6, dans lequel le filtre inclut un filtre passe-haut qui est arrangé pour isoler des composantes à fréquence plus élevée des une ou plusieurs impulsions à fréquence plus élevée reçues.

8. Procédé selon la revendication 6, comprenant en plus déterminer un changement d'amplitude dans le temps des une ou plusieurs impulsions filtrées à fréquence plus élevée reçues.

9. Procédé selon la revendication 1, dans lequel la première séquence d'impulsions à fréquence plus élevée sont comprimées ou encodées ou à la fois comprimées et encodées ou modulées, et la modulation est sélectionnée parmi le groupe constitué en : amplitude, phase, période et quelconque combinaison de celles-ci.

**10.** Procédé selon la revendication 1, dans lequel entre cinq et 100 impulsions de première fréquence sont émises par cycle d'onde à fréquence plus basse, et les premières impulsions à fréquence plus élevée ont une fréquence d'au moins dix fois la fréquence de l'onde à fréquence plus basse.

**11.** Procédé selon la revendication 1, comprenant en plus déterminer une distance radiale vers l'une ou les plusieurs caractéristiques à base d'un premier temps auquel la première séquence d'impulsions à fréquence plus élevée sont transmises, d'un deuxième temps auquel la deuxième séquence d'impulsions à fréquence plus élevée sont reçues et une vélocité du son estimée lelong du chemin de la première séquence d'impulsions à fréquence plus élevée et lelong du chemin des deuxièmes impulsions à fréquence plus élevée.

**12.** Procédé selon la revendication 11, dans lequel déterminer comprend calculer une intercorrélation de la première séquence d'impulsions à fréquence plus élevée avec la deuxième séquence d'impulsions à fréquence plus élevée.

**13.** Appareillage (130) pour investiguer un matériau autour d'un trou de forage (110), l'appareillage comprenant :

une première source d'onde acoustique (105) positionnable dans le trou de forage et configurée pour générer une première onde acoustique ayant une fréquence plus basse dans le matériau pour induire une distorsion linéaire et une distorsion non linéaire dans une ou plusieurs caractéristiques d'inhomogénéité dans le matériau (115) qui sont essentiellement parallèles à l'axe longitudinal du trou de forage (110) ;

une source (120) positionnable dans le trou de forage pour diriger une première séquence d'impulsions à fréquence plus élevée dans une direction perpendiculaire par rapport à l'axe longitudinal du trou de forage (110) dans le matériau (115) contemporainement avec la première onde acoustique ; et

un ou plusieurs récepteurs (125) positionnables dans le trou de forage pour recevoir une ou plusieurs impulsions à fréquence plus élevée produites par une interaction entre la première séquence d'impulsions à fréquence plus élevée et l'une ou les plusieurs caractéristiques qui subissent la distorsion linéaire et la distorsion non linéaire à cause de la première onde acoustique,

où :

la première onde acoustique à fréquence plus basse a des phases alternantes de compression et de dilatation ;

**caractérisé en ce que**

l'appareillage est configuré pour distinguer entre une fissure présente dans le matériau (115) et d'autres dites caractéristiques d'inhomogénéité présentes dans le matériau (115) à base de si l'une ou les plusieurs deuxièmes impulsions à fréquence plus élevées sont reçues en dépendance de la phase de la première onde acoustique à fréquence plus basse ; et

les deuxièmes impulsions à fréquence plus élevée sont reçues à l'un ou les plusieurs récepteurs (125) si la première séquence d'impulsions à fréquence plus élevée rencontre l'une ou les plusieurs caractéristiques d'inhomogénéité dans le matériau (115) qui sont orientées telles qu'elles dirigent l'énergie de retour au trou de forage (110) pendant qu'ils subissent la distorsion à cause de la première onde acoustique à fréquence plus basse tel que la distorsion change un contraste dans l'impédance acoustique pendant un cycle de l'onde acoustique à fréquence plus basse.

**14.** Appareillage selon la revendication 13, dans lequel les deuxièmes impulsions à fréquence plus élevée sont reçues à l'un ou les plusieurs récepteurs si la première séquence d'impulsions à fréquence plus élevée rencontre l'une ou les plusieurs caractéristiques d'inhomogénéité dans le matériau (115) qui sont orientées telles qu'elles dirigent l'énergie de retour au trou de forage (110) si elles subissent la distorsion à cause de l'onde acoustique à fréquence plus basse tel que la distorsion change un contraste dans l'impédance acoustique pendant un cycle de l'onde acoustique à fréquence plus basse.

**15.** Appareillage selon la revendication 13, dans lequel un ou plusieurs récepteurs sont configurés pour enregistrer une ou plusieurs composantes directionnelles de l'une ou des plusieurs deuxièmes impulsions à fréquence plus élevée.

**16.** Appareillage selon la revendication 13, comprenant en plus un processeur en communication avec une mémoire ayant des instructions stockées dessus qui, si elles sont exécutées, est configurée pour déterminer une distance radiale du trou de forage vers l'une ou les plusieurs caractéristiques à base de la vélocité du son lelong du chemin de la première séquence d'impulsions à fréquence plus élevée et lelong du chemin des deuxièmes impulsions à fréquence plus élevée.

**17.** Appareillage selon la revendication 13, comprenant en plus un processeur en communication avec une mémoire ayant des instructions stockées dessus qui, si elles sont exécutées, est configurée pour produire une ou plusieurs images tridimensionnelles du matériau à base de pénétrations répétées d'ondes acoustiques dans le matériau à différentes orientations d'azimut et à différentes profondeurs dans le trou de forage.

**18.** Appareillage selon la revendication 13, comprenant en plus un processeur en communication avec une mémoire ayant des instructions exécutables par machine stockées dessus qui, si elles sont exécutées, causent le processeur à déterminer si le matériel inclut un réflecteur linéaire ou un réflecteur non linéaire à base des une ou plusieurs impulsions à fréquence plus élevée reçues.

**19.** Appareillage selon la revendication 18, comprenant en plus un filtre arrangé pour filtrer les une ou plusieurs impulsions à fréquence plus élevée reçues.

**20.** Appareillage selon la revendication 19, dans lequel le filtre inclut un filtre passe-haut qui est arrangé pour isoler des composantes à fréquence plus élevée des une ou plusieurs impulsions à fréquence plus élevée reçues.

**21.** Appareillage selon la revendication 19, dans lequel le processeur est arrangé pour déterminer un changement d'amplitude dans le temps des une ou plusieurs impulsions filtrées à fréquence plus élevée reçues.

**22.** Appareillage selon la revendication 18, comprenant en plus un encodeur arrangé pour encoder la première séquence d'impulsions à fréquence plus élevée avec une signature variant dans le temps en introduisant une composante qui varie avec le temps qui inclut compression ou balayages de fréquence ou modulation de l'amplitude, la phase, la période et quelconque combinaison de celles-ci.

**23.** Appareillage selon la revendication 13, dans lequel le processeur utilise la première séquence d'impulsions encodées à fréquence plus élevée pour mesurer une durée de trajet entre la première séquence et la deuxième séquence reçue.

**24.** Appareillage selon la revendication 13, dans lequel entre cinq et 100 impulsions de première fréquence sont émises par cycle d'onde à fréquence plus basse, et les premières impulsions à fréquence plus élevée ont une fréquence d'au moins dix fois la fréquence de l'onde à fréquence plus basse.

**25.** Appareillage selon la revendication 18, dans lequel la distance radiale est déterminée en calculant une intercorrélation dans un domaine de temps de la première séquence d'impulsions à fréquence plus élevée avec les deuxièmes impulsions à fréquence plus élevée.

**26.** Appareillage selon la revendication 25, dans lequel le processeur est arrangé pour déterminer une distance radiale vers le matériel à base d'un premier temps auquel la première séquence d'impulsions à fréquence plus élevée étaient transmises, d'un deuxième temps auquel la deuxième séquence d'impulsions à fréquence plus élevée étaient reçues et une vélocité du son estimée dans le matériel.

**27.** Procédé pour investiguer un matériau autour d'un trou de forage, le procédé comprenant :

générer à l'intérieur du trou de forage une vibration intermittente à fréquence plus basse qui se propage comme onde en forme de tube longitudinalement vers le trou de forage et induit une distorsion non linéaire dans une ou plusieurs caractéristiques d'inhomogénéité (430) dans le matériau qui sont essentiellement perpendiculaires à l'axe longitudinal du trou de forage ;
générer dans le trou de forage une séquence d'impulsions à fréquence plus élevée dirigées telles qu'elles se déplacent longitudinalement vers le trou de forage dans le matériau autour ; et
recevoir, sur un ou plusieurs récepteurs (425) positionnables dans le trou de forage, un signal qui inclut des composantes de la vibration à fréquence plus basse et la séquence d'impulsions à fréquence plus élevée, mesuré si ladite vibration à fréquence plus basse cause l'onde en forme de tube à se propager relativement aux vélocités de propagation d'impulsion associées à la séquence d'impulsions à fréquence plus élevée mesurées si ladite vibration à fréquence plus basse est arrêtée.

**28.** Procédé selon la revendication 27, dans lequel l'un ou les plusieurs récepteurs sont configurés pour enregistrer une ou plusieurs composantes directionnelles de la séquence d'impulsions à fréquence plus élevée.

**29.** Procédé selon la revendication 27, comprenant en plus répéter la génération de la vibration à fréquence plus basse et des séquences d'impulsions à fréquence plus élevée à différentes orientations de l'azimut et à différentes profondeurs à l'intérieur du trou de forage pour produire une ou plusieurs images du matériau sélectionnées parmi le groupe constitué en : une vélocité linéaire, un module linéaire, une vélocité non linéaire, un module non linéaire, et leurs combinaisons.

30. Procédé selon la revendication 27, dans lequel un cycle de distorsion élastique causé par la vibration à fréquence plus basse résulte en une variation cyclique correspondante dans la vélocité locale dans le matériau.

31. Procédé selon la revendication 27, comprenant en plus traiter une séquence d'impulsions à fréquence plus élevée retournée du matériau vers l'un ou les plusieurs récepteurs du matériau pour déterminer une réponse non linéaire élastique.

32. Appareillage pour investiguer un matériau autour d'un trou de forage, l'appareillage comprenant :

une première source d'onde acoustique (405) configurée pour générer à l'intérieur du trou de forage une vibration intermittente à fréquence plus basse qui se propage comme onde en forme de tube longitudinalement vers le trou de forage et induit une distorsion non linéaire dans une ou plusieurs caractéristiques dans le matériau qui sont essentiellement perpendiculaires à l'axe longitudinal du trou de forage ;
une deuxième source d'onde acoustique (420) configurée pour diriger un une séquence continue d'impulsions à fréquence plus élevée telles quelles se déplacent longitudinalement vers le trou de forage dans le matériau ; et
un ou plusieurs récepteurs (425) positionnables dans le trou de forage pour recevoir un signal qui inclut des composantes de la vibration à fréquence plus basse et la séquence d'impulsions à fréquence plus élevée pendant la génération intermittente de la vibration à fréquence plus basse,
**caractérisé en ce que**
l'appareillage est configuré pour distinguer entre une fissure présente dans le matériau et d'autres desdites caractéristiques d'inhomogénéité présentes dans le matériau à base de changements de la vélocité de propagation d'impulsion associées à la séquence d'impulsions à fréquence plus élevée mesurées si ladite vibration à fréquence plus basse cause l'onde en forme de tube à se propager relativement aux vélocités de propagation d'impulsion associées à la séquence d'impulsions à fréquence plus élevée mesurées si ladite première source d'ondes acoustiques (405) est arrêtée.

33. Appareillage selon la revendication 32, dans lequel l'un ou les plusieurs récepteurs sont configurés pour enregistrer une ou plusieurs composantes directionnelles de la séquence d'impulsions à fréquence plus élevée.

34. Appareillage selon la revendication 32, comprenant en plus un contrôleur configuré pour répéter la génération de la vibration à fréquence plus basse et des séquences d'impulsions à fréquence plus élevée à différentes orientations de l'azimut et à différentes profondeurs à l'intérieur du trou de forage pour produire une ou plusieurs images du matériau sélectionnées parmi le groupe constitué en : une vélocité linéaire, un module linéaire, une vélocité non linéaire, un module non linéaire, et leurs combinaisons.

35. Appareillage selon la revendication 32, dans lequel un cycle de distorsion élastique causé par la vibration à fréquence plus basse généré par la première source d'ondes acoustiques résulte en une variation cyclique correspondante dans la vélocité locale dans le matériau.

36. Appareillage selon la revendication 32, comprenant en plus un processeur en communication avec une mémoire ayant des instructions exécutables par machine stockées dessus qui, si elles sont exécutées, causent le processeur à déterminer une réponse non linéaire élastique du matériau à base d'une séquence d'impulsions à fréquence plus élevée retournée du matériau vers l'un ou les plusieurs récepteurs.

EP 2 622 379 B1

Figure 1

Tool body 130

Receiver Array 125

Clamped compressional source 105

Pulsed compressional or shear source 120

Receiver Array 125

Borehole 110

Material 115

Crack open →
Crack closed →

Fracture in formation intermittently reflects pulse sequence

CHS RevA 20 Sep 2010

21

Figure 2a, Received Pulses from Void or Interface (Linear Response)

Figure 2b, Received Pulses from Crack (Non-Linear Response)

Figure 3.

"B" Void (Linear)

"A" Crack (non-linear)

Figure 3a, Tool Hardware and Borehole Configuration of Figure 1

Reflection from crack at "A"

Envelope Detector

Time

Figure 3b, Detection of Non-Linear
Scatterer with Envelope Detector

Reflection from void at "B"

Envelope Detector

Time

Figure 3c, Detection of Linear
Scatterer with Envelope Detector

Figure 4

| Label |
|-------|
| Borehole 410 |
| 405 Vibration (pump) source |
| 420 Ultrasonic/ acoustic source |
| 435 Refracted waves |
| 430 Horizontal fracture |
| 425 Receiver Array |
| Rx1 |
| Rx2 |
| Rx3 |
| Rx4 |

CHS RvB 20 Sep 2010

Figure 5a, Probe Pulse

Figure 5b, Regular Probe Pulse Sequence (Pump Silent)

Figure 5c, Low Frequency Pump Cycles

Figure 5d, Probe Pulses Superimposed on Pump Cycle

Figure 5e, Modulated and Unmodulated Probe Pulses

Receiver 1    Receiver 3
Receiver 2    Receiver 4

Figure 6a, Received waveforms with no pump vibration (reference condition)

Figure 6b, Received waveforms during maximum low frequency compression

Figure 6c, Received waveforms during maximum low frequency dilatation

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5521882 A

**Non-patent literature cited in the description**

- **D. A. KAS'YANOV ; G. M. SHALASHOV.** Nonlinear acoustic logging. *XI Session of the Russian Acoustical Society,* 2001

- **VAN DEN ABEELE ; K. E.-A., A. SUTIN ; J. CARMELIET ; P. JOHNSON.** Micro-damage diagnostics using nonlinear elastic wave spectroscopy (NEWS). *NDT&E International,* 2001, vol. 34, 239-248